# EUROPEAN PATENT SPECIFICATION

(11) **EP 1 259 733 B1**
(45) Date of publication and mention of the grant of the patent: **23.06.2004**
(21) Application number: 01914242.1
(22) Date of filing: 27.02.2001
(51) Int. Cl.: F03B 1/02, F03B 11/02

(54) **RADIAL WATER TURBINE**
RADIALE WASSERTURBINE
TURBINE A EAU RADIALE

(30) Priority: 01.03.2000 NO 20001036
(43) Date of publication of application: 27.11.2002
(73) Proprietor: Small Turbine Partner AS, 7075 Tiller (NO)
(72) Inventor: BREKKE, Hermod, N-7026 Trondheim (NO)
(74) Representative: Howe, Steven
(86) International application number: PCT/NO2001/000076
(87) International publication number: WO 2001/065111

(56) References cited:
- DE-C- 2 007
- FR-A1- 2 604 487
- SE-C- 3 469

## Description

This invention relates to a radial-type hydraulic turbine comprising a turbine housing with a runner and with a water inlet to a water duct having a decreasing flow cross-sectional area around the circumference for supplying water to the runner, as well as an axial water outlet from the turbine housing, whereby the turbine housing comprises two substantially planar, parallel plate parts as delimitations in axial direction, the plate parts being oriented to be normal to the turbine axis.

The new turbine design described here is of particular interest in small power stations, where it can be important to avoid too high investments in complicated constructions. When there is here the question of radial-type hydraulic turbines, this may in certain cases comprise turbines of the radial/axial-type, such as more or less typical Francis turbines.

Known turbine designs from far back in time traditionally have been built with many complicated shapes, whereby double-curvature surfaces have been employed to a large extent. The traditional scroll casings are typical examples in that respect.

From the very old (year 1878) German patent specification DE 2007 however, there is known a design being in part based on planar plate parts as mentioned in the introduction above. This known design is unfavourable with respect to flow pattern and yield, especially because of the shape and course of the water flow towards the runner.

A more recent example is shown in FR-A-2 604 487.

With the present invention it has been found that in particular form small power stations having a relatively low output, it is possible to simplify the turbine design substantially without detracting too much in terms of efficiency.

According to the invention this has been obtained in the first place in that the opening for water flow from the water duct to the runner has a smaller axial dimension than the spacing between the plate parts, and in that between the plate parts there is provided an outer plate wall formed by bending of an elongate, rectangular piece of sheet material, as a radial delimitation of the water duct outwardly and with an at least approximate spiral shape as seen in the plane of the plate parts.

Thus, by basing the design in this manner essentially on plate parts which can be shaped and assembled in a simple way, there is obtained a very simple solution being very favourable with respect to manufacturing. Thereby the expenses will be correspondingly reduced. This can be of substantial significance for the question of whether of not a given, comparatively small hydraulic power resource will be utilized at all. At the same time there is obtained that the water flow towards the runner will have a favourable flow pattern for the purpose of an advantageous efficiency.

Based on the main principles of a turbine design according to the invention, as states above, there are many possibilities of further simplifications or possible modifications which can contribute to making the radial-type hydraulic turbines according to the invention still more advantageous.

Stationary or possibly movable guide vanes of more or less conventional type or a turbine design without guide vanes can be comprised by the invention. Moreover can not only the turbine housing itself, but also the runner be based on the principle of plate structures. However, the turbine housing is regarded to be most important in this regard, since the runner can be of a more or less conventional design, such as cast in metal or plastic materials and comprising double-curvature blades and an axial outlet formed more or less as a runner for Francis turbines.

In the following description the invention will be explained more closely with reference to the drawings, wherein:
- Fig. 1: shows an axial cross-section through a first radial-type turbine designed according to the invention,
- Fig. 2: in perspective view and somewhat cut away, shows a corresponding design as the one in Fig. 1,
- Fig. 3: shows (3A/3B) an embodiment in the principle as in Figs. 1 and 2, in a (half) axial cross-section and in a radial cross-section, respectively,
- Fig. 4: shows (4A/4B) a somewhat modified embodiment in relation to the one in Figs. 3A/3B, and
- Fig. 5: shows in more detail, at an enlarged scale and in axial cross-section, certain design features that are also found in Fig. 4A and partly in Fig. 3A.

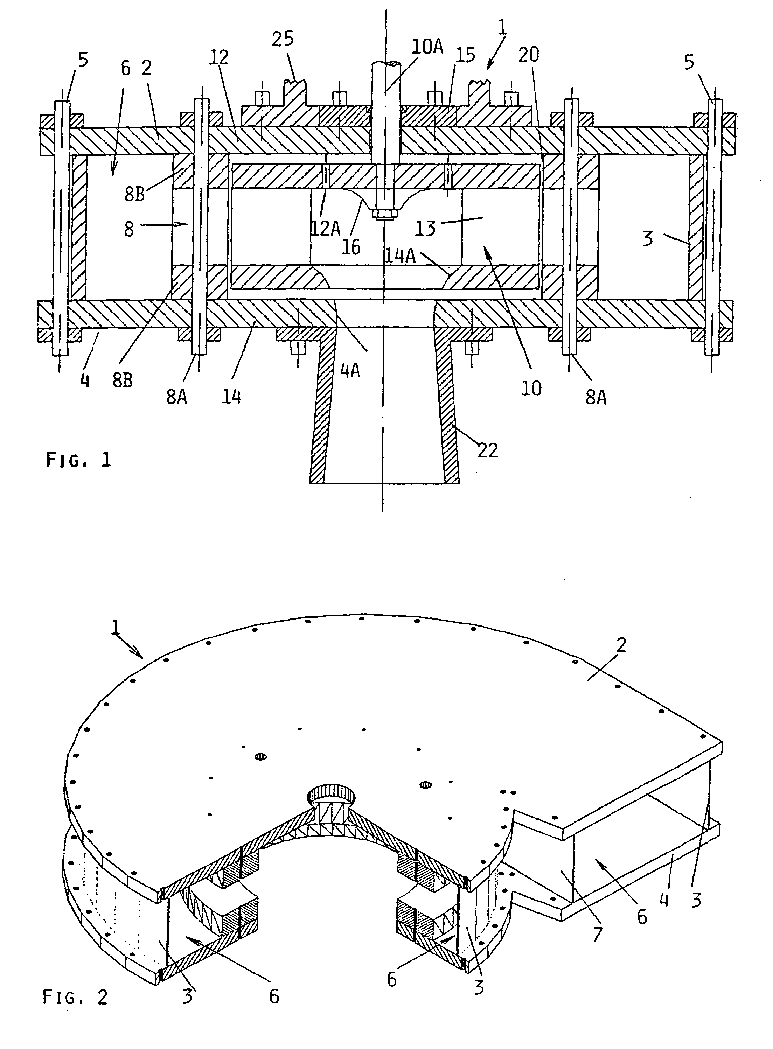

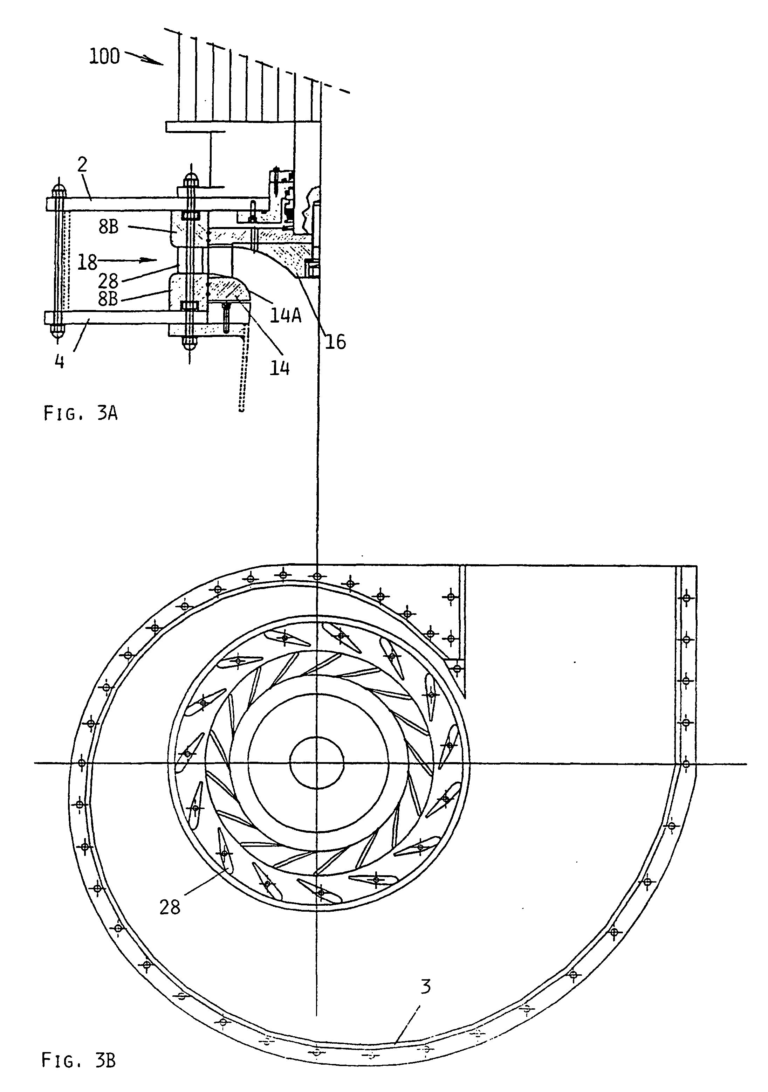

It will be realized that the drawings do not show all practical details, but are simplified in order to illustrate what is essential to the invention. The turbine housing in the drawings, as will appear in particular from Figs. 1 and 2, are constructed with two planar and parallel plate parts 2 and 4, for delimiting the turbine housing in the axial direction. The turbine axis in indicated at 10A, coinciding with an upward output axle that can drive an associated electric generator. As an outer delimitation of the turbine housing there is mounted between the plate parts 2 and 4 an outer plate wall 3 that can for example be fastened or clamped between plates 2 and 4 by means of a number of bolts 5. The bolts 5 are shown positioned around the outer circumference of turbine housing 1, and in addition thereto there can be provided further fastening bolts, as shown at 8A in Fig. 1. Fastening bolts 8A here also serve for clamping plate parts 2 and 4 against the edge of stationary guide vanes 8 (see below). It is obvious that also other fastening means can be used for assembling the above mentioned main components of the turbine housing 2, for example welding.

As will be seen from Fig. 2 and in particular Fig. 3B, the outer plate wall 3 as an approximate spiral shape, i.e. with a decreasing flow cross-sectional area inwards from the opening in the housing for supplying water thereto. Fig. 1 and Fig. 3A shows an axial water outlet 22 from the turbine housing 1.

With the structure as so far described, it is seen that the flow cross-section of water duct 6 will be substantially rectangular and has a smaller axial height than the radial width of the water inlet. At the innermost end of water duct 6, however, where the plate wall 3 is terminated at a wall part 7, the radial width of the water duct 6, preferably is smaller than the axial height thereof between plates 2 and 4. It is obvious that plate wall 3 in actual practice suitably can be formed by bending of an elongate, rectangular piece of plate material. This involves a work operation that is relatively simple and inexpensive compared to the above discussed traditional and complicated scroll casing or housing shapes.

A design of the turbine housing 1 being important in actual practice, consists in an upper and lower cascade ring 8B/8B mounted by means of pins or grooves in plates 2 and 4, having the effect that the opening for the water flow from water duct 6 to an inwardly lying runner 10, has a smaller axial dimension than the spacing between plate parts 2 and 4. This is significant for a favourable water flow towards the runner 10. The cascade rings 8B (and the fastening bolts 8A) moreover serve for the mounting of the guide vanes 8, which can be stationary or adjustable. However, as mentioned above it is within the framework of the invention also to exclude all guide vanes, and in particular in this case it is a great advantage that the plate wall 3 substantially follows a logarithmic spiral shape, as seen in cross-section as in Fig. 3B. The generator axle that in Fig. 1 is shown only partially at 10A, extends through a sealing ring 15 being mounted to the upper plate part 2, where there is also provided mounting brackets 25 for the electric generator (not shown).

In line with the principle of building the turbine structure of plate parts, it is an advantage according to the invention that possible guide vanes 8 are made of sheet material and preferably are of single curvature or mainly planar. Such a simple shape is illustrated in Fig. 3B, where the inlet end of the guide vanes 8 are somewhat rounded and the outlet end is pointed into a favourable streamlined shape of the cross-section of the guide vanes.

As will be seen in particular from Fig. 1, the runner 10 has two mechanically supporting planar discs 12 and 14 as main elements, whereby the runner blades 13 are attached to the two discs. In a simplified embodiment it may be sufficient with disc 12 as supporting element, whereby in such case the runner 10 will have a downwardly open structure from the axially directed terminal edges of the runner blades 13. Also the runner blades can with advantage be formed of sheet material and can be plane or have a single curvature. Accordingly, also the runner will to a substantial degree involve the advantage of a simple and inexpensive plate structure in the same way as discussed above with respect to turbine housing 1.

The disc 14 at the outlet side of the runner has an outlet opening with an edge profile 14A being somewhat rounded in a streamlined shape, which is favourable with respect to the flow pattern and can be manufactured in a simple and inexpensive way by suitable machining. A similar observation also applies to an adjacent edge profile 4A around the outlet opening in plate part 4 of the turbine housing.

In order to release the pressure between plate part 2 and runner disc 12, there is shown a series of holes 12A through runner disc 12 for leaking water by passing the runner 10. These together with a small gap 20 against the cascade ring 8B at both sides of runner 10, will bring the water leaks to a minimum in a manner known per se, and provide for a favourable total water flow through runner 10. For the same purpose disc 12 can be provided with an outlet cone 16 having a streamlined shape so that in a known way it will have a favourable influence on the waterflow.

Whereas Fig. 3B to a high degree can be regarded as representing a radial cross-section through the structure of Fig. 1, the embodiment according to Fig. 3A is somewhat modified at certain points. The inlet opening 18 between rings 8B for waterflow towards the runner, is here significantly narrowed in the axial direction compared to the corresponding dimension in the embodiment of Fig. 1. Thus, in this respect the two embodiments can be regarded as approximately representing extreme limits of the relationship between the axial dimension of opening 18 and the spacing between plate parts 2 and 4. In Fig. 1 this relationship or ratio is about 1/2 and in Fig. 3A the ratio is approximately 1/4.

Another modification from Fig. 1 to Fig. 3A consists in the fact that the whole rounding for obtaining a streamlined water outlet at the outlet side, is provided at the edge profile 14A of the lower runner disc 14. Besides in Fig. 3A the outlet cone 16 is somewhat enlarged in relation to the one in Fig. 1. Finally Fig. 3A shows a part of a generator 100 being intended to be driven by the turbine.

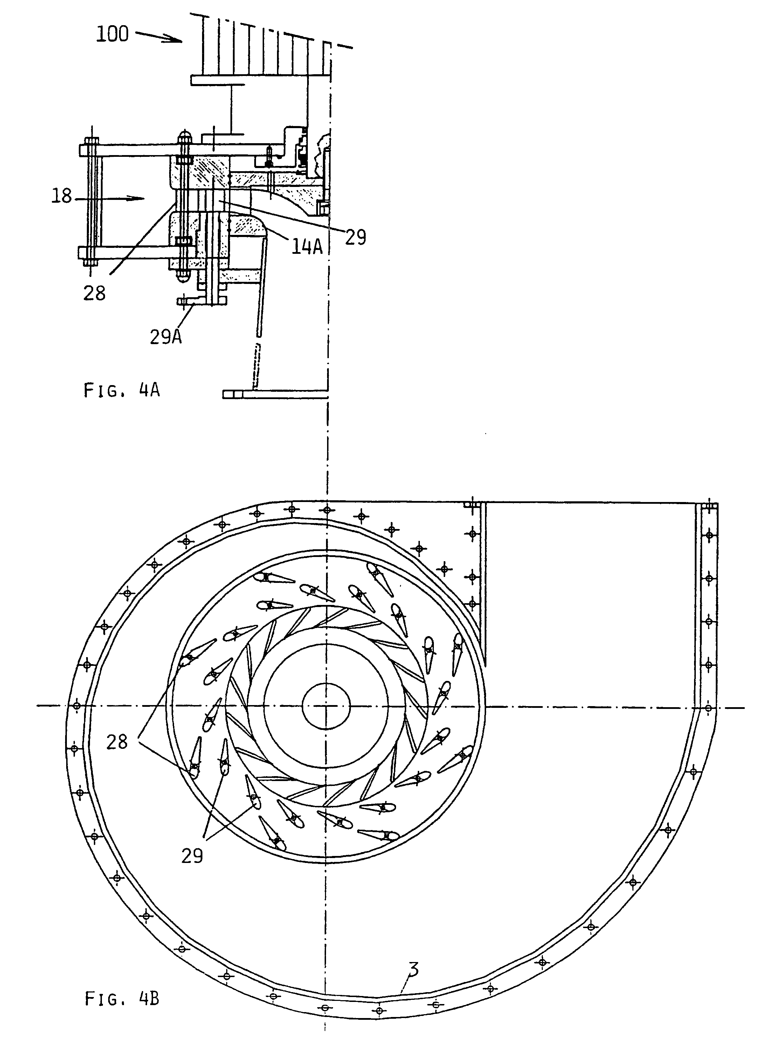

The embodiment of Figs. 4A, 4B represents a further development of the one in Figs. 3A, 3B, namely in that in addition to stationary guide vanes or stay vanes 28 there are provided fully adjustable guide vanes as shown at 29. Here the number of adjustable guide vanes 29 is higher than the number of stationary vanes 28, but this relationship can vary within wide limits in practice. As known per se the regulation of guide vanes 29 can be effected by means of arms 29A on axles carrying the guide vanes 29. Moreover in accordance with known techniques, the adjustable guide vanes 29 are located downstream of, i.e. radially inside the stationary guide vanes 28.

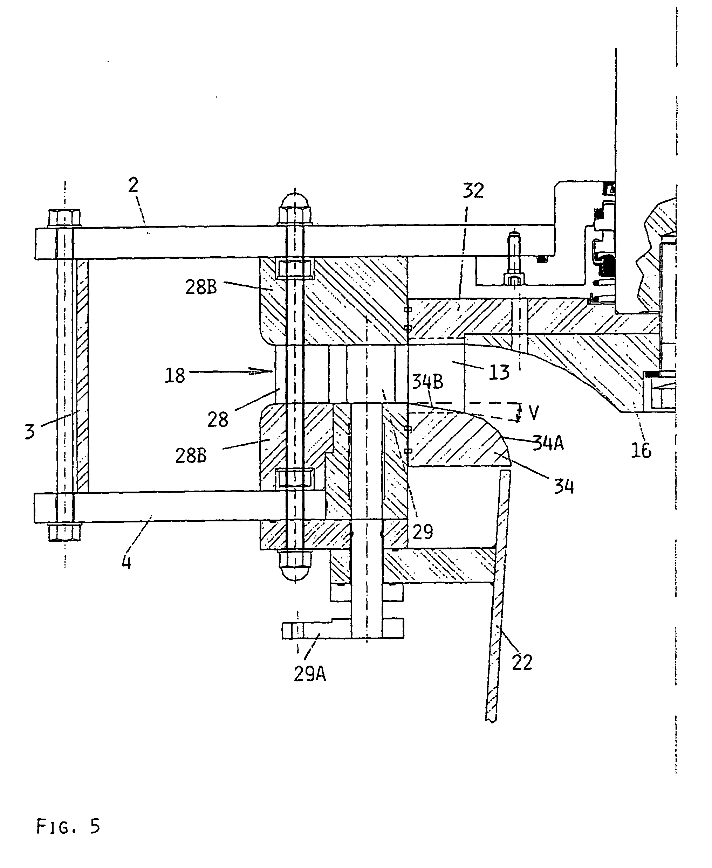

Finally Fig. 5 somewhat more in detail shows an embodiment based on Fig. 4A, but with dimensional relationships somewhat changed, in particular with respect to the axial dimension of the opening 18 in relation to the spacing between plates 2 and 4. This relationship as shown in Fig. 5 is approximately the same as the ratio in Fig. 1. What is of particular interest in Fig. 5, is the design of the lower runner disc 34, which together with an upper runner disc 32 holds the runner blades 13 in their place. The upper side 34B of disc 34 has a small conicity at an angle V as indicated, so that the spacing from the upper runner disc 32 increases in the water flow direction inwards from the periphery of the runner. It has been found that the conicity in terms of the angle V should be smaller than 15°.

Besides the runner disc 34 has a rounded edge profile 34A similar to edge profiles 14A in Figs. 3A and 4A. Moreover it is more apparent from Fig. 5 that the lower plate part 4 lacks a rounding of the edge portion at the upstream end of draft tube 22.

In addition to the modification mentioned above with respect to both the turbine housing 1 and the runner 10, it is to be mentioned that even though the embodiment of the drawings may indicate that a vertical turbine axis is required, a corresponding turbine design can also be employed in the case of a horizontal axis.

## Claims

1. Radial-type hydraulic turbine comprising a turbine housing (1) with a runner (10) and with a water inlet to a water duct (6) having a decreasing flow cross-sectional area around the circumference for supplying water to the runner (10), as well as an axial water outlet (22) from the turbine housing (1), whereby the turbine housing (1) comprises two substantially planar, parallel plate parts (2,4) as delimitations in axial direction, and the plate parts (2,4) are oriented to be normal to the turbine axis (10A),
**characterized in that** the opening (8,18) for water flow from the water duct (6) to the runner (10) has a smaller axial dimension than the spacing between plate parts (2,4), and that between the plate parts (2,4) there is provided an outer plate wall (3) formed by bending of an elongate, rectangular piece of sheet material, as a radial delimitation of the water duct (6) outwardly and with an at least approximate spiral shape as seen in the plane of the plate parts.

2. Radial-type hydraulic turbine according to claim 1,
**characterized in that** the flow cross-section of the water duct (6) is rectangular, and that the flow cross-section has a smaller axial height than radial width at the water inlet, but a smaller radial width than the axial height at the opposite, inner end of the water duct (6).

3. Radial-type hydraulic turbine according to claim 1 or 2,
**characterized in that** there are provided stationary guide vanes (8,28).

4. Radial-type hydraulic turbine according to claim 1 or 2,
**characterized in that** there are provided guide vanes (8,28) being adjustable at least in two positions.

5. Radial-type turbine according to claim 3 or 4,
**characterized in that** the guide vanes (8) are formed of sheet material and preferably are single-curved or mainly planar.

6. Radial-type hydraulic turbine according to any one of claims 1-5,
**characterized in that** the spiral shape of the plate wall (3) corresponds to a logarithmic spiral.

7. Radial-type turbine according to any one of claims 1-6,
**characterized in that** the runner (10) comprises at least one supporting, preferably planar disc (12,14) to which the blades (13) of the runner are attached.

8. Radial-type turbine according to claim 7,
**characterized in that** the runner blades (13) are formed of a sheet material.

9. Radial-type turbine according to claim 8,
**characterized in that** the runner blades (13) are planar or single-curved.

10. Radial-type turbine according to any one of claims 7-9,
**characterized in that** a supporting, mainly planar runner disc (14,34) at the outlet side of the runner has an outlet opening with a streamlined rounded edge profile (14A,34A).

11. Radial-type turbine according to claim 10,
**characterized in that** the runner blades (13) are also attached to a second, planar disc (12,32) lying at a spacing from said runner disc (14,34), and that the upper side (34B) of said runner disc (14,34) has a small conicity (V) with decreasing spacing from said second planar disc (12,32) in the direction from the outlet opening towards the periphery.

12. Radial-type turbine according to claim 11,
**characterized in that** said small conicity (V) is smaller than 15°.

13. Radial-type turbine according to any one of claims 3-12,
**characterized in that** downstream of (radially inside) the stationary guide vanes (28) there are provided adjustable guide vanes (29).

14. Radial-type turbine according to any one of claims 1-13,
**characterized in that** the ratio between said smaller axial dimension of the opening (8,18) and the spacing between the plate parts (2,4) is in the range 1/4-1/2.

## Patentansprüche

1. Hydraulische Turbine vom Radialtyp, die ein Turbinengehäuse (1) mit einem Laufrad (10) und mit einem Wassereinlass zu einem Wasserkanal (6), der abnehmende Strömungsquerschnittsfläche um den Umfang zum Liefern von Wasser zum Laufrad (10) aufweist, und auch mit einem axialen Wasserauslass (22) vom Turbinengehäuse (1) aufweist, wobei das Turbinengehäuse (1) zwei im wesentlichen ebene parallele Plattenteile (2, 4) als Begrenzung in Axialrichtung aufweist, und wobei die Plattenteile (2, 4) so ausgerichtet sind, dass sie zur Turbinenachse (10A) senkrecht stehen, **dadurch gekennzeichnet, dass** die Öffnung (8, 18) für Wasserströmung vom Wasserkanal (6) zum Laufrad (10) eine kleinere axiale Abmessung als der Abstand zwischen den Plattenteilen (2, 4) hat, und dass zwischen den Plattenteilen (2, 4) eine äußere Plattenwand (3) vorgesehen ist, die durch Biegen eines länglichen rechteckigen Stücks von Platten- oder Blechmaterial als radiale Begrenzung des Wasserkanals (6) nach außen und mit einer wenigstens angenäherten Spiralform, gesehen in der Ebene der Plattenteile, ausgebildet ist.

2. Hydraulische Turbine vom Radialtyp nach Anspruch 1, **dadurch gekennzeichnet, dass** der Strömungsquerschnitt des Wasserkanals (6) rechteckig ist und dass der Strömungsquerschnitt eine kleinere axiale Höhe als radiale Breite am Wassereinlass, jedoch eine kleinere radiale Breite als die axiale Höhe am gegenüberliegenden inneren Ende des Wasserkanals (6) hat.

3. Hydraulische Turbine vom Radialtyp nach Anspruch 1 oder 2, **dadurch gekennzeichnet, dass** feststehende Führungsschaufeln oder -flügel (8, 28) vorgesehen sind.

4. Hydraulische Turbine vom Radialtyp nach Anspruch 1 oder 2, **dadurch gekennzeichnet, dass** Führungsschaufeln oder -flügel (8, 28) vorgesehen sind, die wenigstens in zwei Stellungen einstellbar sind.

5. Turbine vom Radialtyp nach Anspruch 3 oder 4, **dadurch gekennzeichnet, dass** die Führungsschaufeln oder - flügel (8) aus Platten- oder Blechmaterial gebildet sind und vorzugsweise einfach gekrümmt oder hauptsächlich eben sind.

6. Hydraulische Turbine vom Radialtyp nach einem der Ansprüche 1 bis 5, **dadurch gekennzeichnet, dass** die Spiralform der Plattenwand (3) einer logarithmischen Spirale entspricht.

7. Turbine vom Radialtyp nach einem der Ansprüche 1 bis 6, **dadurch gekennzeichnet, dass** das Laufrad (10) wenigstens eine vorzugsweise ebene Tragscheibe (12, 14) aufweist, an der die Schaufeln (13) des Laufrades angebracht sind.

8. Turbine vom Radialtyp nach Anspruch 7, **dadurch gekennzeichnet, dass** die Laufradschaufeln (13) aus einem Platten- oder Blechmaterial gebildet sind.

9. Turbine vom Radialtyp nach Anspruch 8, **dadurch gekennzeichnet, dass** die Laufradschaufeln (13) planar oder einfach gekrümmt sind.

10. Turbine vom Radialtyp nach einem der Ansprüche 7 bis 9, **dadurch gekennzeichnet, dass** eine hauptsächlich ebene Laufradtragscheibe (14, 34) an der Auslassseite des Laufrades eine Auslassöffnung mit einem stromlinienförmig abgerundeten Randprofil (14A, 34A) aufweist.

11. Turbine vom Radialtyp nach Anspruch 10, **dadurch gekennzeichnet, dass** die Laufradschaufeln (13) auch an einer zweiten ebenen Scheibe (12, 32) angebracht sind, die in einem Abstand von der Laufradscheibe (14, 34) angeordnet ist und dass die Oberseite (34B) der Laufradscheibe (14, 34) eine kleine Konizität (V) mit abnehmendem Abstand von der zweiten ebenen Scheibe (12, 32) in Richtung von der Auslassöffnung zum Umfang aufweist.

12. Turbine vom Radialtyp nach Anspruch 11, **dadurch gekennzeichnet, dass** die kleine Konizität (V) kleiner ist als 15°.

13. Turbine vom Radialtyp nach einem der Ansprüche 3 bis 12, **dadurch gekennzeichnet, dass** stromab (radial innerhalb) der stationären Führungsschaufeln oder -platten (28) einstellbare Führungsschaufeln oder -platten (29) vorgesehen sind.

14. Turbine vom Radialtyp nach einem der Ansprüche 1 bis 13, **dadurch gekennzeichnet, dass** das Verhältnis zwischen der kleineren axialen Abmessung der Öffnung (8, 18) und dem Abstand zwischen der Plattenteile (2, 4) im Bereich von 1/4-1/2 ist.

## Revendications

1. Turbine hydraulique de type radial comprenant un logement de turbine (1) possédant une roue (10) et une alimentation en eau d'un conduit à eau (6) ayant une section à débit décroissant autour de la circonférence afin de fournir de l'eau à la roue (10), ainsi qu'une évacuation d'eau axiale (22) sortant du logement de turbine (1), moyennant quoi le logement de turbine (1) comprend deux parties de plaques sensiblement planaires et parallèles (2, 4) en tant que délimitations dans la direction axiale, et les parties de plaques (2, 4) sont orientées pour être normales par rapport à l'axe de la turbine (10A),
**caractérisée en ce que** l'ouverture (8, 18) destinée à l'écoulement d'eau entre le conduit à eau (6) et la roue (10) possède une dimension axiale plus petite que l'espacement situé entre les parties de plaques (2, 4), et **en ce que**, entre les parties de plaques (2, 4), est prévue une paroi de plaque extérieure (3) formée par le cintrage d'une pièce allongée rectangulaire en tôle, en tant que délimitation radiale du conduit à eau (6) vers l'extérieur, et possédant une forme au moins approximative en spirale, comme on peut le voir sur le plan des parties de plaques.

2. Turbine hydraulique de type radial selon la revendication 1, **caractérisée en ce que** la section d'écoulement du conduit à eau (6) est rectangulaire, et **en ce que** la section d'écoulement possède une hauteur axiale plus petite que la largeur radiale de l'alimentation en eau, mais une largeur radiale plus petite que la hauteur axiale de l'extrémité intérieure opposée du conduit à eau (6).

3. Turbine hydraulique de type radial selon la revendication 1 ou 2,
**caractérisée en ce que** sont prévues des aubes directrices stationnaires (8, 28).

4. Turbine hydraulique de type radial selon la revendication 1 ou la revendication 2,
**caractérisée en ce que** sont prévues des aubes directrices (8, 28) étant ajustables dans au moins deux positions.

5. Turbine hydraulique de type radial selon la revendication 3 ou 4, **caractérisée en ce que** les aubes directrices (8) sont formées en tôle et sont de préférence à simple courbure ou principalement planaires.

6. Turbine hydraulique de type radial selon l'une quelconque des revendications 1 à 5,
**caractérisée en ce que** la forme en spirale de la paroi de plaque (3) correspond à une spirale logarithmique.

7. Turbine hydraulique de type radial selon l'une quelconque des revendications 1 à 6, **caractérisée en ce que** la roue (10) comprend au moins un disque de support de préférence planaire (12, 14) auquel les aubes (13) de la roue sont reliées.

8. Turbine hydraulique de type radial selon la revendication 7,
**caractérisée en ce que** les aubes de la roue (13) sont formées en tôle.

9. Turbine hydraulique de type radial selon la revendication 8,
**caractérisée en ce que** les aubes de la roue (13) sont planaires ou à simple courbure.

10. Turbine hydraulique de type radial selon l'une quelconque des revendications 7 à 9, **caractérisée en ce qu'**un disque de roue de support principalement planaire (14, 34) situé sur le côté évacuation de la roue possède une ouverture d'évacuation possédant un profil de bord arrondi aérodynamique (14A, 34A).

11. Turbine hydraulique de type radial selon la revendication 10, **caractérisée en ce que** les aubes de roue (13) sont également reliées à un second disque planaire (12, 32) se trouvant à un espacement dudit disque de roue (14, 34), et **en ce que** le côté supérieur (34B) dudit disque de roue (14, 34) possède une faible conicité (V) avec un espacement décroissant à partir dudit second disque planaire (12, 32) dans la direction allant de l'ouverture d'évacuation vers la périphérie.

12. Turbine hydraulique de type radial selon la revendication 11,
**caractérisée en ce que** ladite faible conicité (V) est inférieure à 15°.

13. Turbine hydraulique de type radial selon l'une quelconque des revendications 3 à 12,
**caractérisée en ce que**, en aval (radialement vers l'intérieur) des aubes directrices stationnaires (28), sont prévues des aubes directrices ajustables (29).

14. Turbine hydraulique de type radial selon l'une quelconque des revendications 1 à 13,
**caractérisée en ce que** le rapport entre ladite dimension axiale plus petite de l'ouverture (8, 18) et l'espacement entre les parties de plaques (2, 4) est de l'ordre de 1/4 à 1/2.
